(19) Europäisches Patentamt / European Patent Office / Office européen des brevets

(11) **EP 1 639 239 B1**

(12) **FASCICULE DE BREVET EUROPEEN**

(45) Date de publication et mention de la délivrance du brevet:
**07.10.2009 Bulletin 2009/41**

(21) Numéro de dépôt: **04767463.5**

(22) Date de dépôt: **25.06.2004**

(51) Int Cl.:
**F01N 3/08** (2006.01)

(86) Numéro de dépôt international:
**PCT/FR2004/001615**

(87) Numéro de publication internationale:
**WO 2005/003529 (13.01.2005 Gazette 2005/02)**

(54) **PROCEDE ET DISPOSITIF D'ESTIMATION D'UNE MASSE D'OXYDES D'AZOTE STOCKEE DANS UN DISPOSITIF DE PIEGEAGE CATALYTIQUE DE VEHICULE AUTOMOBILE**

VERFAHREN UND VORRICHTUNG ZUR ABSCHÄTZUNG EINER IN EINER KATALYTISCHEN AUFFANGVORRICHTUNG EINES KRAFTFAHRZEUGS EINGESPEICHERTEN STICKOXIDMASSE

METHOD AND DEVICE FOR ESTIMATING A NITROGEN OXIDE MASS STORED IN A CATALYTIC TRAPPING DEVICE OF A MOTOR VEHICLE

(84) Etats contractants désignés:
**AT BE BG CH CY CZ DE DK EE ES FI FR GB GR HU IE IT LI LU MC NL PL PT RO SE SI SK TR**

(30) Priorité: **30.06.2003 FR 0307889**

(43) Date de publication de la demande:
**29.03.2006 Bulletin 2006/13**

(73) Titulaire: **RENAULT S.A.S.**
**92100 Boulogne Billancourt (FR)**

(72) Inventeurs:
• **BARRILLON, Pascal**
  **F-92130 Issy-Les-Moulineaux (FR)**
• **COCHET, Stéphane**
  **45800 Saint Jean de Braye (FR)**
• **GAUVIN, Fabrice**
  **F-91540 Mennecy (FR)**
• **MEURISSE, Olivier**
  **92160 Antony (FR)**

(56) Documents cités:
WO-A-01/00972          WO-A-01/00977
WO-A-99/36689          DE-A- 19 907 382

**Description**

La présente invention concerne un procédé et un système d'estimation d'une masse d'oxydes d'azote stockée dans un dispositif de piégeage catalytique d'oxydes d'azote traversé par les gaz d'échappement d'un moteur à combustion interne de véhicule automobile.

L'estimation de la masse d'oxydes d'azote stockée dans un tel dispositif de piégeage catalytique est notamment utile pour gérer la régénération du dispositif de piégeage catalytique, en alimentant le moteur avec un mélange plus riche en carburant lors d'une phase de régénération dudit dispositif. Le document WO 01/00972 décrit un tel dispositif.

En effet, afin de répondre à la baisse des seuils admis pour les émissions de gaz polluants des véhicules automobiles, un dispositif de piégeage catalytique peut être disposé dans la ligne d'échappement du moteur. Contrairement à un catalyseur d'oxydation traditionnel, le dispositif de piégeage catalytique fonctionne de façon discontinue, c'est-à-dire qu'en fonctionnement nominal en mélange pauvre en carburant, le dispositif catalytique piège les oxydes d'azote, mais ne les traite pas. Pour régénérer le dispositif de piégeage catalytique, le moteur doit fonctionner en mélange riche en carburant pendant une courte période de régénération du dispositif, afin que les hydrocarbures imbrûlés et les monoxydes de carbone alors émis en grande quantité réduisent les oxydes d'azote stockés.

Pour optimiser le traitement de l'ensemble des polluants, il est nécessaire de gérer au mieux les phases de stockage et de régénération du piège. Il est notamment nécessaire d'estimer au cours du temps la quantité d'oxydes d'azote stockée, ou du moins l'efficacité de stockage en oxydes d'azote du dispositif de piégeage, pendant le fonctionnement nominal du moteur en mélange pauvre en carburant.

Le brevet DE 199 07 382 porte sur l'estimation de la température d'un dispositif de piégeage d'oxydes d'azote à partir de la température des gaz en amont du dispositif de piégeage. Toutefois, il n'est pas utilisé pour estimer les quantités d'oxydes d'azotes adsorbés, ni les efficacités de stockage et de purge.

L'invention a pour but, au vu de ce qui précède, de proposer une solution qui permette d'estimer la masse d'oxydes d'azote stockée dans un dispositif de piégeage catalytique d'oxydes d'azote, de manière plus précise que dans les méthodes connues.

Le procédé selon l'invention permet d'estimer une masse d'oxydes d'azote stockée dans un dispositif de piégeage catalytique d'oxydes d'azote, comprenant une phase catalytique, traversé par les gaz d'échappement d'un moteur à combustion interne de véhicule automobile, comportant une unité de contrôle électronique. Dans ce procédé, on discrétise la géométrie du dispositif de piégeage catalytique en plusieurs (n) réacteurs individuels successifs parfaitement agités. De plus, on combine un modèle thermique, permettant de calculer la variation de la température de la phase catalytique du dispositif de piégeage catalytique lors de la traversée des gaz d'échappement, et un modèle d'adsorption permettant de calculer à tout instant la masse d'oxydes d'azote stockée dans le dispositif de piégeage catalytique en fonction des caractéristiques du dispositif de piégeage catalytique, des températures issues du modèle thermique pour chaque réacteur individuel, et du débit massique de gaz d'échappement du moteur.

Les propriétés d'adsorption d'oxydes d'azote de la phase catalytique sont très fortement liées à la température des sites d'adsorption. La combinaison d'un modèle d'adsorption se basant sur l'état thermique de la phase catalytique à un modèle thermique permet d'améliorer efficacement les estimations.

Dans un mode de mise en oeuvre préféré, on effectue une correction sur la capacité de stockage du dispositif de piégeage catalytique en oxydes d'azote de chaque réacteur individuel i de rang i (i=1 à n) étant une fonction prédéterminée de la température de la phase catalytique du réacteur individuel i. Ladite capacité de stockage est une fonction de paramètres correctifs comprenant la vitesse volumique horaire du réacteur individuel i, le vieillissement du dispositif de piégeage catalytique, et son empoisonnement au soufre.

Dans un mode de mise en oeuvre avantageux, on calcule la masse d'oxydes d'azote adsorbée instantanément ($dNS\_i/dt$) par le dispositif de piégeage catalytique de chaque réacteur individuel i (i=1 à n) au moyen de la relation suivante :

$$\frac{\bar{d}NS\_i}{dt} = NOx\_i \quad * \quad Eff\_i$$

dans laquelle :

NOx_i :   débit massique d'oxydes d'azote en entrée du réacteur individuel i, en g/s, NOx_1 calculé ;

Eff_i :   efficacité de stockage instantanée dans le réacteur individuel i, fonction prédéterminée de NS_i/NSC_i et de T_i, obtenue par bouclage du calcul de NS_i/NSC_i ;

NS_i :   masse d'oxydes d'azote présente dans le réacteur i , en g ;

NSC_i :   masse maximale d'oxydes d'azote pouvant être stockée par le réacteur i, en g

T_i :   température de la phase catalytique en entrée du réacteur individuel i, calculée par le modèle thermique, en K.

Dans un mode de mise en oeuvre préféré, on calcule la masse d'oxydes d'azote (NS_i) présente dans le réacteur individuel i depuis la fin de la dernière phase de régénération du dispositif de piégeage catalytique au moyen de la relation suivante :

$$NS\_i = \int_{t_0}^{t}\left(\frac{dNS\_i}{dt}\right)dt \; + \; NS\_i(t_0)$$

dans laquelle :

intervalle t0 à t :   intervalle de temps entre la fin ($t_0$) de la dernière phase de régénération du dispositif de piégeage catalytique et l'instant présent (t), en s ; et

NS_i :   masse d'oxydes d'azote présente dans le réacteur i , en g.

NS_i($t_0$):   masse estimée d'oxydes d'azote présente dans le réacteur i à l'instant t0 correspondant à la fin de la dernière phase de régénération du dispositif catalytique (1), en g.

Dans un mode de mise en oeuvre avantageux, on calcule la masse totale (NS) d'oxydes d'azote stockée dans l'ensemble du dispositif de piégeage catalytique au moyen de la relation suivante :

$$NS = \sum_{i=1}^{n} NS\_i$$

dans laquelle :

NS :   masse totale d'oxydes d'azote stockée dans l'ensemble du dispositif de piégeage catalytique, en g ; et

NS_i :   masse d'oxydes d'azote présente dans le réacteur individuel i, en g.

Dans un mode de mise en oeuvre préféré, on calcule le débit d'oxydes d'azote non traités quittant le dernier réacteur n, au moyen de la relation suivante :

$$NOx\_sortie\ échappement = NOx\_n * (1 - Eff\_n)$$

dans laquelle :

NOx_sortie échappement :   débit massique d'oxydes d'azote non traités, en sortie d'échappement après traversée du dispositif de piégeage catalytique, en g/s ;

NOx_n :   débit massique d'oxydes d'azote en entrée du dernier réacteur n, en g/s ; et

Eff_n :   efficacité de stockage instantanée dans le dernier réacteur n.

Dans un mode de mise en oeuvre avantageux, on discrétise la géométrie du dispositif de piégeage catalytique en un nombre de réacteurs individuels successifs parfaitement agités compris entre 1 et 6.

Le dispositif selon l'invention permet d'estimer d'une masse d'oxydes d'azote stockée dans un dispositif de piégeage catalytique d'oxydes d'azote, comprenant une phase catalytique, et traversé par les gaz d'échappement d'un moteur à combustion interne de véhicule automobile, comportant une unité de contrôle électronique. Le dispositif comprend en outre :

- des moyens pour discrétiser la géométrie du dispositif de piégeage catalytique en plusieurs (n) réacteurs individuels successifs parfaitement agités ; et
- des moyens pour estimer la masse d'oxydes d'azote présente dans le dispositif de piégeage catalytique en combinant un modèle thermique permettant de calculer la variation de la température de la phase catalytique du dispositif de piégeage catalytique (1) lors de la traversée des gaz d'échappement, et un modèle d'adsorption permettant de calculer à tout instant la masse d'oxydes d'azote stockée dans le dispositif de piégeage catalytique (1) en fonction des caractéristiques du dispositif de piégeage catalytique (1), des températures issues du modèle thermique pour chaque réacteur individuel, et du débit massique de gaz d'échappement du moteur (3).

Dans un mode de réalisation préféré, le dispositif comprend des moyens pour effectuer une correction sur la capacité de stockage du dispositif de piégeage catalytique (1) en oxydes d'azote de chaque réacteur individuel i de rang i. Ladite correction est une fonction prédéterminée de la température d'entrée du réacteur individuel i, et ladite capacité de stockage est une fonction de paramètres correctifs comprenant la vitesse volumique horaire du réacteur individuel i, le vieillissement du dispositif de piégeage catalytique, et son empoisonnement au soufre.

Une application particulièrement intéressante de l'invention consiste à régénérer périodiquement un dispositif de piégeage catalytique d'oxydes d'azote traversé par les gaz d'échappement d'un moteur à combustion interne à mélange pauvre de véhicule automobile comportant une unité de contrôle électronique. On estime la masse d'oxydes d'azote piégée dans le dispositif de piégeage catalytique au moyen du procédé selon l'invention, ou avec un dispositif selon l'invention, qui sera une donnée d'entrée d'un dispositif de gestion des phases de régénération du dispositif catalytique.

D'autres buts, caractéristiques et avantages de l'invention apparaîtront à la lecture de la description suivante, donnée uniquement à titre d'exemple nullement limitatif, et faite en référence aux dessins annexés sur lesquels :

- la figure 1 est un schéma synoptique d'un dispositif selon l'invention ;
- la figure 2 est un diagramme illustrant un réacteur individuel selon l'invention ; et
- la figure 3 est un diagramme illustrant un dispositif discrétisé selon l'invention.

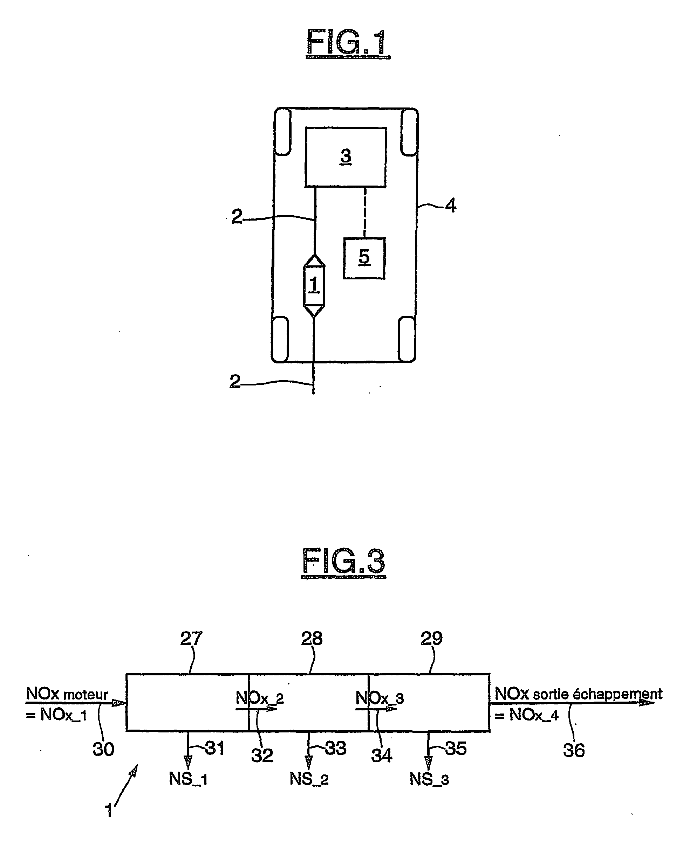

Sur la figure 1, on a représenté l'architecture générale d'un système d'estimation d'une masse d'oxydes d'azote stockée dans un dispositif de piégeage catalytique 1 d'oxydes d'azote traversé par des gaz d'échappement 2 d'un moteur 3 à combustion interne de véhicule automobile 4, alimenté en mélange pauvre en carburant, comportant une unité de contrôle électronique 5. L'unité de contrôle électronique 5 est connectée avec le dispositif de piégeage catalytique 1, et avec le moteur 3.

Le moteur 3 rejette des gaz d'échappement dans la ligne d'échappement 2. Ces gaz d'échappement traversent le dispositif de piégeage catalytique 1 qui va stocker une partie des oxydes d'azote contenus dans les gaz d'échappement. Ces gaz sont ensuite rejetés dans l'atmosphère. L'unité électronique de calcul est reliée à des moyens de commande du moteur 3 permettant de faire fonctionner le moteur 3 en mélange riche en carburant comme moyen de régénération du dispositif de piégeage catalytique 1.

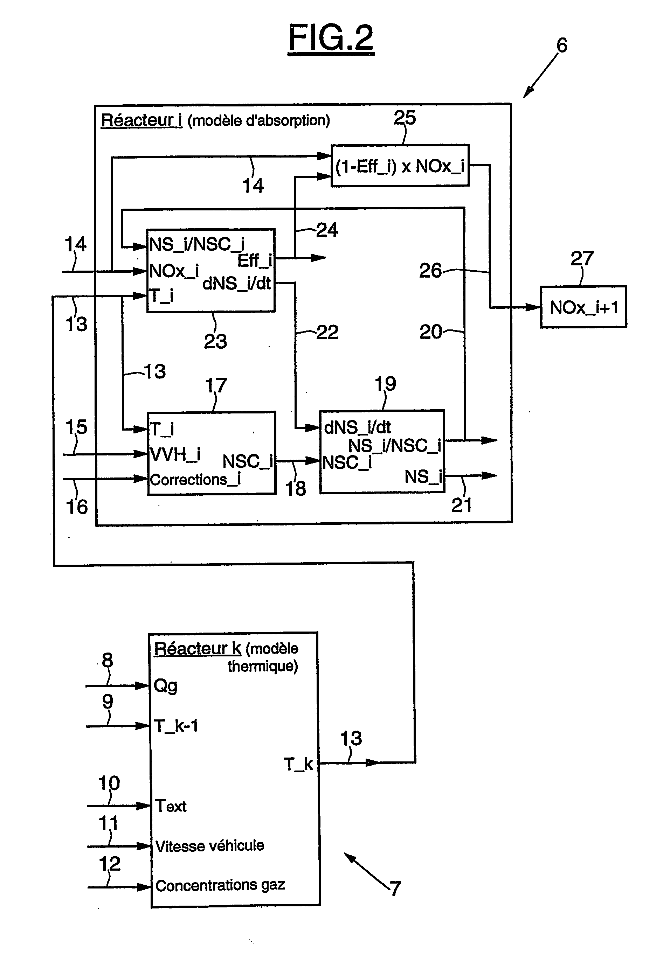

La figure 2 représente un réacteur individuel 6 parfaitement agité de rang i appartenant à la discrétisation du dispositif de piégeage catalytique 1 en n réacteurs individuels parfaitement agités, pour un modèle d'adsorption, selon l'invention. On décrit ici, à titre d'exemple, un modèle thermique permettant de calculer à partir de certaines données en entrée la température de sortie sur un réacteur individuel. On peut également prendre un autre modèle thermique valable. Ce modèle utilise également une discrétisation du dispositif catalytique en réacteurs individuels, indépendante de la discrétisation du modèle d'adsorption. Ce modèle thermique permet de calculer la température de sortie d'un réacteur individuel de rang k du modèle thermique correspondant à l'entrée d'un réacteur individuel de rang i du modèle d'adsorption. Le réacteur individuel de rang k du modèle thermique est choisi de manière à ce que sa température en sortie soit celle du réacteur de rang i du modèle d'adsorption, en d'autres termes de manière à ce qu'une partie de la phase catalytique de ces deux réacteurs individuels soit commune.

En entrée du réacteur individuel 7 de rang k du modèle thermique, ledit modèle thermique pris à titre d'exemple utilise le débit massique Qg des gaz d'échappement, dont la valeur est amenée sur l'entrée 8 du réacteur 7, la température $T\_{k-1}$ arrivant sur l'entrée 9 dudit réacteur individuel 7 de rang k-1. La température Text mesurée sous le capot moteur et amenée à l'entrée 10, la vitesse du véhicule amenée sur l'entrée 11, et les concentrations des substances contenues dans les gaz d'échappement en entrée du dispositif de piégeage catalytique 1 sont amenées sur l'entrée 12. Le modèle thermique permet de calculer la température $T\_k$ de sortie 13 du réacteur individuel 7 de rang k-1, qui sert de température d'entrée $T\_i$ du réacteur individuel 6 de rang i pour le modèle d'adsorption, la valeur de $T\_k$ égale à $T\_i$ étant amenée par la connexion 13. Le modèle d'adsorption utilise, en entrée d'un réacteur individuel 6 de rang i dudit modèle d'adsorption, la température en entrée $T\_i$, amenée sur l'entrée 13, le débit massique $NOx\_i$ d'oxydes d'azote amené sur l'entrée 14, un facteur correctif comme la vitesse volumique horaire $VVH\_i$ sur l'entrée 15, et d'éventuelles autres corrections, comme le vieillissement du dispositif de piégeage catalytique 1 ou le niveau d'empoisonnement au soufre sur l'entrée 16. En effet, le vieillissement thermique du dispositif de piégeage catalytique se traduit par une diminution irréversible de la surface spécifique d'échange accessible aux gaz. Le vieillissement thermique impacte donc l'adsorption des oxydes d'azote ainsi que la réduction de ces oxydes d'azote lors des phases de régénération du dispositif. des modifications irréversibles de la phase active en contact avec les gaz d'échappement, comme le frittage des métaux précieux, et de modifications irréversibles de la structure poreuse à base d'alumine, comme le frittage de l'alumine. De plus, la phase catalytique est sensible à l'empoisonnement par le soufre, car les oxydes de soufre Sox, entrant en compétition avec les oxydes d'azote NOx, viennent se fixer sur les sites actifs de la phase catalytique. Ces oxydes de soufre ne sont pas réduits ou désorbés lors des phases de régénération des NOx, il faut effectuer une régénération spécifique par désorption thermique en présence de réducteurs. Un bloc 17 calcule alors la masse maximale, $NSC\_i$

d'oxydes d'azote pouvant être stockée par le réacteur i 6, en sortie 18 du bloc 17. Cette masse maximale NSC_i dépend notamment de la température dans le réacteur de rang i, et de la vitesse volumique horaire et la composition du gaz. Un bloc 19 calcule le rapport NS_i/NSC_i en oxydes d'azotes du réacteur individuel 6 de rang i en sortie 20 du bloc 19, ainsi que la masse NS_i d'oxydes d'azote présente dans le réacteur i 6 en sortie 21 du bloc 19. Le bloc 19 effectue ces calculs au moyen de l'entrée 18 NSC_i, et de l'entrée 22 représentant la quantité d'oxydes d'azote adsorbée instantanément dNS_i/dt par le réacteur i 6. La quantité d'oxydes d'azote adsorbée instantanément dNS_i/dt par le réacteur i 6 est calculée par un bloc 23. Le modèle d'adsorption comprend un bouclage du rapport NS_i/NSC_i en oxydes d'azotes du réacteur individuel 6 de rang i du bloc 19 sur le bloc 23 par la connexion 20. La masse NSC_i du réacteur individuel 6 de rang i est une fonction prédéterminée de T_i. Le bloc 23 calcule également, en sortie 24, l'efficacité Eff_i de stockage instantanée d'oxydes d'azote dans le réacteur individuel 6 de rang i, comme une fonction prédéterminée du rapport NS_i/NSC_i et de T_i. Un bloc 25 calcule alors le débit massique d'oxydes d'azote NOx_i+1 en sortie 26 du réacteur individuel 6 de rang i, qui sera le débit massique en entrée du réacteur de rang i+1. Ce calcul, effectué par le bloc 25 au moyen de la formule (1-Eff_i)*NOx_i qui prend en entrée l'efficacité Eff_i de stockage instantanée d'oxydes d'azote et le débit massique NOx_i d'oxydes d'azote. Le modèle d'adsorption permet de calculer le débit massique d'oxydes d'azote NOx_i+1 en sortie 26 du réacteur individuel 6 de rang i, qui sera une entrée du modèle d'adsorption pour le réacteur individuel de rang i+1. La valeur NOx_1 du débit massique d'oxydes d'azote en entrée du premier réacteur et la vitesse volumique horaire VVH_i sont calculées au moyen de modèles connus ou mesurées. La quantité d'oxydes d'azote instantanément adsorbée par le réacteur individuel 6 de rang i dNS_i/dt est calculée au moyen du produit NOx_i * Eff_i. On en déduit ensuite la masse d'oxydes d'azote NS_i stockée dans le réacteur individuel 6 de rang i en intégrant la masse adsorbée instantanément dNS_i/dt sur l'intervalle de temps entre la fin de la dernière phase de régénération du dispositif de piégeage catalytique et l'instant présent et en y ajoutant la masse estimée d'oxydes d'azote $NS_i(t_0)$ présente dans le réacteur i à l'instant $t_0$ correspondant à la fin de la dernière phase de régénération du dispositif catalytique (1).

Au final, on a calculé la masse d'oxydes d'azote présente dans le dispositif de piégeage catalytique 1 en sommant les masses d'oxydes d'azote NS_i présentes dans chaque réacteur individuel 6 de rang i, pour i allant de 1 à n :

$$NS = \sum_{i=1}^{n} NS\_i.$$ On peut également calculer le débit massique d'oxydes d'azote non traités par le dispositif de piégeage catalytique 1.

La figure 3 représente un dispositif discrétisé selon l'invention, en trois réacteurs individuels successifs parfaitement agités, à savoir le réacteur 27 de rang 1, le réacteur 28 de rang 2, et le réacteur 29 de rang 3. Chaque réacteur de rang i se comporte comme cela est expliqué dans la figure 2. Nous avons en entrée 30 le débit massique d'oxydes d'azote NOx_moteur en sortie du moteur 3, qui est le débit massique d'oxydes d'azote NOx_1 en entrée 30 du premier réacteur 27. On calcule alors la masse d'oxydes d'azote NS_1, en sortie 31, stockée dans le premier réacteur 27, et le débit massique d'oxydes d'azote NOx_2 en sortie 32 du premier réacteur 27 et en entrée 32 du deuxième réacteur 28. De même, on calcule la masse d'oxydes d'azote NS_2, en sortie 33, stockée dans le deuxième réacteur 28, et le débit massique d'oxydes d'azote NOx_3 en sortie 34 du deuxième réacteur 28 et en entrée 34 du troisième réacteur 29. Puis, on calcule la masse d'oxydes d'azote NS_3, en sortie 35, stockée dans le troisième réacteur 29, et le débit massique d'oxydes d'azote NOx_4 en sortie 36 du troisième réacteur 29 soit le débit massique d'oxydes d'azote NOx_sortie_échappement en sortie 36 du dispositif de piégeage catalytique 1. Nous avons donc calculé le débit massique d'oxydes d'azote NOx_sortie_échappement en sortie 36 du dispositif de piégeage catalytique 1 et il suffit de sommer NS_1, NS_2, et NS_3 pour obtenir la quantité totale cumulée dans le dispositif de piégeage catalytique 1 depuis la fin de la dernière phase de régénération dudit dispositif.

L'invention permet d'estimer la masse d'oxydes d'azote piégée dans le dispositif de piégeage catalytique de manière précise, en tenant compte simultanément d'un modèle thermique et d'un modèle d'adsorption dans le dispositif de piégeage catalytique.

L'invention permet également d'estimer avec précision le débit massique d'oxydes d'azote en sortie du dispositif de piégeage catalytique.

L'invention permet en outre de commander la régénération du dispositif de piégeage catalytique par fonctionnement du moteur en mélange riche en carburant pendant une courte durée prédéterminée, à partir de l'estimation de la masse d'oxydes d'azote stockée dans le dispositif de piégeage catalytique, et de sa comparaison avec une valeur prédéterminée.

**Revendications**

1. Procédé d'estimation d'une masse d'oxydes d'azote stockée dans un dispositif de piégeage catalytique (1) d'oxydes d'azote, comprenant une phase catalytique, et traversé par les gaz d'échappement (2) d'un moteur (3) à combustion interne de véhicule automobile (4) comportant une unité de contrôle électronique (5), **caractérisé par le fait que** :

- on discrétise la géométrie du dispositif de piégeage catalytique (1) en plusieurs (n) réacteurs individuels (6, 7) successifs parfaitement agités ; et
- on combine un modèle thermique, permettant de calculer la variation de la température de la phase catalytique du dispositif de piégeage catalytique (1) lors de la traversée des gaz d'échappement, et un modèle d'adsorption permettant de calculer à tout instant la masse d'oxydes d'azote stockée dans le dispositif de piégeage catalytique (1) en fonction des caractéristiques du dispositif de piégeage catalytique (1), des températures issues du modèle thermique pour chaque réacteur individuel, et du débit massique de gaz d'échappement du moteur (3).

2. Procédé selon la revendication 1, **caractérisé par le fait que** l'on effectue une correction sur la capacité de stockage du dispositif de piégeage catalytique (1) en oxydes d'azote de chaque réacteur individuel i de rang i (i=1 à n) étant une fonction prédéterminée de la température de la phase catalytique du réacteur individuel i, ladite capacité de stockage étant une fonction de paramètres correctifs comprenant la vitesse volumique horaire du réacteur individuel i, le vieillissement du dispositif de piégeage catalytique (1), et son empoisonnement au soufre.

3. Procédé selon la revendication 2, **caractérisé en ce que** l'on calcule la masse d'oxydes d'azote adsorbée instantanément (dNS_i/dt) par le dispositif de piégeage catalytique (1) de chaque réacteur individuel i (i=1 à n) au moyen de la relation suivante :

$$\frac{dNS\_i}{dt} = NOx\_i \quad * \quad Eff\_i$$

dans laquelle :

NOx_i : débit massique d'oxydes d'azote en entrée du réacteur individuel i, en g/s, NOx_1 calculé ;
Eff_i : efficacité de stockage instantanée dans le réacteur individuel i, fonction prédéterminée de NS_i/NSC_i et de T_i, obtenue par bouclage du calcul de NS_i/NSC_i ;
NS_i : masse d'oxydes d'azote présente dans le réacteur i , en g ;
NSC_i: masse maximale d'oxydes d'azote pouvant être stockée par le réacteur i, en g
T_i: température de la phase catalytique en entrée du réacteur individuel i, calculée par le modèle thermique, en K.

4. Procédé selon la revendication 3, **caractérisé en ce que** l'on calcule la masse d'oxydes d'azote (NS_i) présente dans le réacteur individuel i au moyen de la relation suivante :

$$NS\_i = \int_{t_0}^{t}\left(\frac{dNS\_i}{dt}\right)dt \quad + \quad NS\_i(t_0)$$

dans laquelle :

intervalle $t_0$ à t : intervalle de temps entre la fin ($t_0$) de la dernière phase de régénération du dispositif de piégeage catalytique (1) et l'instant présent (t), en s ; et
NS_i : masse d'oxydes d'azote présente dans le réacteur i , en g.
NS_i($t_0$): masse estimée d'oxydes d'azote présente dans le réacteur i à l'instant t0 correspondant à la fin de la dernière phase de régénération du dispositif catalytique (1), en g.

5. Procédé selon la revendication 4, **caractérisé en ce que** l'on calcule la masse totale (NS) d'oxydes d'azote stockée dans l'ensemble du dispositif de piégeage catalytique (1) au moyen de la relation suivante :

$$NS = \sum_{i=1}^{n} NS\_i$$

dans laquelle :

NS : masse totale d'oxydes d'azote stockée dans l'ensemble du dispositif de piégeage catalytique (1), en g ; et
NS_i : masse d'oxydes d'azote présente dans le réacteur individuel i, en g.

6. Procédé selon la revendication 5, **caractérisé en ce que** l'on calcule le débit d'oxydes d'azote non traités quittant le dernier réacteur n, au moyen de la relation suivante :

$$NOx\_sortie\ échappement = NOx\_n * (1 - Eff\_n)$$

dans laquelle :

NOx_sortie échappement : débit massique d'oxydes d'azote non traités, en sortie d'échappement après traversée du dispositif de piégeage catalytique (1), en g/s ;
NOx_n : débit massique d'oxydes d'azote en entrée du dernier réacteur n, en g/s ; et
Eff_n : efficacité de stockage instantanée dans le dernier réacteur n.

7. Procédé selon l'une quelconque des revendications 1 à 6, **caractérisé par le fait que** l'on discrétise la géométrie du dispositif de piégeage catalytique (1) en un nombre de réacteurs individuels successifs parfaitement agités compris entre 1 et 6.

8. Dispositif d'estimation d'une masse d'oxydes d'azote stockée dans un dispositif de piégeage catalytique (1) d'oxydes d'azote, comprenant une phase catalytique, et traversé par les gaz d'échappement (2) d'un moteur (3) à combustion interne de véhicule automobile (4), comportant une unité de contrôle électronique (5), **caractérisé en ce qu'**il comprend :

- des moyens pour discrétiser la géométrie du dispositif de piégeage catalytique en plusieurs (n) réacteurs individuels successifs parfaitement agités ; et
- des moyens pour estimer la masse d'oxydes d'azote présente dans le dispositif de piégeage catalytique (1) en combinant un modèle thermique permettant de calculer la variation de la température de la phase catalytique du dispositif de piégeage catalytique (1) lors de la traversée des gaz d'échappement, et un modèle d'adsorption permettant de calculer à tout instant la masse d'oxydes d'azote stockée dans le dispositif de piégeage catalytique (1) en fonction des caractéristiques du dispositif de piégeage catalytique (1), des températures issues du modèle thermique pour chaque réacteur individuel, et du débit massique de gaz d'échappement du moteur (3).

9. Dispositif selon la revendication 8, **caractérisé en ce qu'**il comprend des moyens pour effectuer une correction sur la capacité de stockage du dispositif de piégeage catalytique (1) en oxydes d'azote de chaque réacteur individuel i de rang i, ladite correction étant une fonction prédéterminée de la température d'entrée du réacteur individuel i, et ladite capacité de stockage étant une fonction de paramètres correctifs comprenant la vitesse volumique horaire du réacteur individuel i, le vieillissement du dispositif de piégeage catalytique (1), et son empoisonnement au soufre.

10. Procédé de régénération périodique d'un dispositif de piégeage catalytique (1) d'oxydes d'azote traversé par les gaz d'échappement (2) d'un moteur (3) à combustion interne de véhicule automobile (4) comportant une unité de contrôle électronique (5), **caractérisé par le fait que** l'on estime la masse d'oxydes d'azote piégée dans le dispositif de piégeage catalytique (1) au moyen du procédé selon les revendications 6 ou 7, ou avec un dispositif selon les revendications 8 ou 9.

**Claims**

1.  Method of estimating a mass of nitrogen oxides stored in a catalytic nitrogen oxides trap (1) comprising a catalytic phase, and through which there pass the exhaust gases (2) of an internal combustion engine (3) of a motor vehicle (4) comprising an electronic control unit (5), **characterized in that**:

    - the geometry of the catalytic trap (1) is broken down into several (n) perfectly agitated successive individual reactors (6, 7); and
    - a thermal model, that can be used for calculating the variation in temperature of the catalytic phase of the catalytic trap (1) as the exhaust gases pass through it is combined with an adsorption model that can be used to calculate, at any instant, the mass of nitrogen oxides stored in the catalytic trap (1) as a function of the characteristics of the catalytic trap (1), of the temperatures from the thermal model for each individual reactor, and of the mass flow rate of exhaust gases from the engine (3).

2.  Method according to Claim 1, **characterized in that** a correction is applied to the storage capacity of the catalytic nitrogen oxides trap (1) of each individual reactor i of rank i (i=1 to n) being a predetermined function of the temperature of the catalytic phase of the individual reactor i, the said storage capacity being a function of corrective parameters comprising the hourly volumetric rate of the individual reactor i, the aging of the catalytic trap (1) and the degree to which it has been poisoned with sulphur.

3.  Method according to Claim 2, **characterized in that** the mass of nitrogen oxides instantaneously adsorbed ($dNS\_i/dt$) by the catalytic trap (1) of each individual reactor i (i=1 to n) is calculated using the following relationship:

$$\frac{dNS\_i}{dt} = NOx\_i \times Eff\_i$$

in which:

NOx_i : mass flow rate of nitrogen oxides entering the individual reactor i, in g/s, NOx_1 calculated;
Eff_i : the instantaneous storage efficiency in the individual reactor i, which is a predetermined function of $NS\_i/NSC\_i$ and of $T\_i$, obtained by looping back the calculation of $NS\_i/NSC\_i$;
NS_i : the mass of nitrogen oxides present in reactor i, in g;
NSC_i : the maximum mass of nitrogen oxides that can be stored by the reactor i, in g
T_i : the temperature of the catalytic phase at the entry to the individual reactor i, calculated by the thermal model, in K.

4.  Method according to Claim 3, **characterized in that** the mass of nitrogen oxides ($NS\_i$) present in the individual reactor i is calculated using the following relationship:

$$NS\_i = \int_{t_o}^{t}\left(\frac{dNS\_i}{dt}\right)dt + NS\_i(t_0)$$

In which:

the interval $t_0$ to t: the time interval between the end ($t_0$) of the last regeneration phase of the catalytic trap (1) and the present time (t) in s; and
NS_i : mass of nitrogen oxides present in reactor i, in g
NS_i ($t_0$) : estimated mass of nitrogen oxides present in reactor i at the time t0 corresponding to the end of the last regeneration phase of the catalytic device (1), in g.

5.  Method according to Claim 4, **characterized in that** the total mass (NS) of nitrogen oxides stored in the entire catalytic trap (1) is calculated using the following relationship:

$$NS = \sum_{i=1}^{n} NS\_i$$

in which:

NS : total mass of nitrogen oxides stored in the entire catalytic trap (1), in g; and
NS_i : mass of nitrogen oxides present in the individual reactor i, in g.

6. Method according to Claim 5, **characterized in that** the flow rate of untreated nitrogen oxides leaving the last reactor n is calculated using the following relationship:

$$NOx\_leaving\ exhaust\ =\ NOx\_n \times (1-Eff\_n)$$

in which:

NOx_leaving exhaust: mass flow rate of untreated nitrogen oxides leaving the exhaust having passed through the catalytic trap (1), in g/s:
NOx_n : mass flow rate of nitrogen oxides entering the last reactor n, in g/s; and
Eff_n : instantaneous storage efficiency storage in the final reactor n.

7. Method according to any one of Claims 1 to 6, **characterized in that** the geometry of the catalytic trap (1) is broken down into a number of between 1 and 6 perfectly agitated successive individual reactors.

8. Device for estimating a mass of nitrogen oxides stored in a catalytic nitrogen oxides trap (1), comprising a catalytic phase and through which there pass the exhaust gases (2) of an internal combustion engine (3) of a motor vehicle (4) comprising an electronic control unit (5), **characterized in that** it comprises:

- means for breaking down the geometry of the catalytic trap into several (n) perfectly agitated successive individual reactors; and
- means for estimating the mass of nitrogen oxides present in the catalytic trap (1) by combining a thermal model that can be used to calculate the variation in temperature of the catalytic phase of the catalytic trap (1) as the exhaust gases pass through it and an adsorption model that can be used to calculate at any instant the mass of nitrogen oxides stored in the catalytic trap (1) as a function of the characteristics of the catalytic trap (1), of the temperatures from the thermal model for each individual reactor, and of the mass flow rate of exhaust gas from the engine (3).

9. Device according to Claim 8, **characterized in that** it comprises means for applying a correction to the storage capacity of the catalytic nitrogen oxides trap (1) of each individual reactor i of rank i, the said correction being a predetermined function of the inlet temperature of the individual reactor i, and the said storage capacity being a function of corrective parameters comprising the hourly volumetric flow rate of the individual reactor i, the aging of the catalytic trap (1) and the degree to which it has been poisoned with sulphur.

10. Method for periodically regenerating a catalytic nitrogen oxides trap (1) through which there pass the exhaust gases (2) of an internal combustion engine (3) of a motor vehicle (4) comprising an electronic control unit (5), **characterized in that** the mass of nitrogen oxides trapped in the catalytic trap (1) is estimated using the method according to Claims 6 or 7 or using the device according to Claims 8 or 9.

**Patentansprüche**

1. Verfahren zur Schätzung einer in einer katalytischen Stickoxidfallenvorrichtung (1) gespeicherten Stickoxidmasse, die eine katalytische Phase enthält und von den Abgasen (2) eines Verbrennungsmotors (3) eines Kraftfahrzeugs (4) durchquert wird, das eine elektronische Überwachungseinheit (5) aufweist, **dadurch gekennzeichnet, dass:**

- die Geometrie der katalytischen Fallenvorrichtung (1) in mehrere (n) aufeinanderfolgende einzelne perfekt geschüttelte Reaktoren (6, 7) diskretisiert wird; und

- ein thermisches Modell, das es ermöglicht, die Temperaturänderung der katalytischen Phase der katalytischen Fallenvorrichtung (1) beim Durchgang der Abgase zu berechnen, und ein Adsorptionsmodell kombiniert werden, das es ermöglicht, jederzeit die in der katalytischen Fallenvorrichtung (1) gespeicherte Stickoxidmasse in Abhängigkeit von den Eigenschaften der katalytischen Fallenvorrichtung (1), den vom thermischen Modell für jeden einzelnen Reaktor stammenden Temperaturen und dem Massedurchsatz von Abgasen des Motors (3) zu berechnen.

2. Verfahren nach Anspruch 1, **dadurch gekennzeichnet, dass** eine Korrektur der Speicherkapazität der katalytischen Stickoxidfallenvorrichtung (1) jedes einzelnen Reaktors i des Rangs i (i=1 bis n) durchgeführt wird, wobei die Korrektur eine vorbestimmte Funktion der Temperatur der katalytischen Phase des einzelnen Reaktors i ist, während die Speicherkapazität eine Funktion von Korrekturparametern ist, die die Stundenvolumengeschwindigkeit des einzelnen Reaktors i, die Alterung der katalytischen Fallenvorrichtung (1) und ihre Schwefelvergiftung enthalten.

3. Verfahren nach Anspruch 2, **dadurch gekennzeichnet, dass** die durch die katalytische Fallenvorrichtung (1) jedes einzelnen Reaktors i (i=1 bis n) augenblicklich adsorbierte Stickoxidmasse (dNS_i/dt) mittels der folgenden Beziehung berechnet wird:

$$\frac{dNS\_i}{dt} = NOx\_i * Eff\_i$$

in der bedeuten:

NOx_i : Massedurchsatz von Stickoxiden am Eingang des einzelnen Reaktors i, in g/s, NOx_1 berechnet;
Eff_i : augenblickliche Speichereffizienz im einzelnen Reaktor i, vorbestimmte Funktion von NS_i/NSC_i und von T_i, erhalten durch Schleifenbildung der Berechnung von NS_i/NSC_i;
NS_i : im Reaktor i vorhandene Stickoxidmasse, in g;
NSC_i : maximale Stickoxidmasse, die vom Reaktor i gespeichert werden kann, in g;
T_i : Temperatur der katalytischen Phase am Eingang des einzelnen Reaktors i, berechnet vom thermischen Modell, in K.

4. Verfahren nach Anspruch 3, **dadurch gekennzeichnet, dass** die im einzelnen Reaktor i vorhandene Stickoxidmasse (NS_i) mittels der folgenden Beziehung berechnet wird:

$$NS\_i = \int_{t_0}^{t} \left( \frac{dNS\_i}{dt} \right) dt + NS\_i(t_0)$$

in der bedeuten:

Intervall $t_0$ bis t : Zeitintervall zwischen dem Ende ($t_0$) der letzten Regenerierungsphase der katalytischen Fallenvorrichtung (1) und dem augenblicklichen Zeitpunkt (t), in s; und
NS_i : im Reaktor i vorhandene Stickoxidmasse, in g;
NS_i($t_0$) : im Reaktor i im Zeitpunkt $t_0$ entsprechend dem Ende der letzten Regenerierungsphase der katalytischen Vorrichtung (1) vorhandene geschätzte Stickoxidmasse, in g.

5. Verfahren nach Anspruch 4, **dadurch gekennzeichnet, dass** die gesamte in der Einheit der katalytischen Fallenvorrichtung (1) gespeicherte Stickoxidmasse (NS) mittels der folgenden Beziehung berechnet wird:

$$NS = \sum_{i=1}^{n} NS\_i$$

in der bedeuten:

NS : gesamte Stickoxidmasse, die in der Einheit der katalytischen Fallenvorrichtung (1) gespeichert ist, in g; und
NS_i : im einzelnen Reaktor i vorhandene Stickoxidmasse, in g.

6. Verfahren nach Anspruch 5, **dadurch gekennzeichnet, dass** der Durchsatz von nicht behandelten Stickoxiden, die den letzten Reaktor n verlassen, mittels der folgenden Beziehung berechnet wird:

$$NOx\text{-}\textit{Auspuffausgang}=NOx\_n*(1\text{-}Eff\_n)$$

in der bedeuten:

NOx_Auspuffausgang : Massedurchsatz nicht behandelter Stickoxide am Auspuffausgang nach Durchquerung der katalytischen Fallenvorrichtung (1), in g/s;
NOx_n : Massedurchsatz von Stickoxiden am Eingang des letzten Reaktors n, in g/s; und
Eff_n : augenblickliche Speichereffizienz im letzten Reaktor n.

7. Verfahren nach einem der Ansprüche 1 bis 6, **dadurch gekennzeichnet, dass** die Geometrie der katalytischen Fallenvorrichtung (1) in eine Anzahl von aufeinanderfolgenden einzelnen perfekt geschüttelten Reaktoren zwischen 1 und 6 diskretisiert wird.

8. Vorrichtung zur Schätzung einer Stickoxidmasse, die in einer katalytischen Stickoxidfallenvorrichtung (1) gespeichert ist, die eine katalytische Phase enthält und von den Abgasen (2) eines Verbrennungsmotors (3) eines Kraftfahrzeugs (4) durchquert wird, das eine elektronische Überwachungseinheit (5) aufweist, **dadurch gekennzeichnet, dass** sie enthält:

- Einrichtungen zum Diskretisieren der Geometrie der katalytischen Fallenvorrichtung in mehrere (n) einzelne aufeinanderfolgende perfekt geschüttelte Reaktoren; und
- Einrichtungen, um die Stickoxidmasse zu schätzen, die in der katalytischen Fallenvorrichtung (1) vorhanden ist, indem ein thermisches Modell, das es ermöglicht, die Temperaturänderung der katalytischen Phase der katalytischen Fallenvorrichtung (1) beim Durchgang der Abgase zu berechnen, und ein Adsorptionsmodell kombiniert werden, das es ermöglicht, jederzeit die in der katalytischen Fallenvorrichtung (1) gespeicherte Stickoxidmasse in Abhängigkeit von den Eigenschaften der katalytischen Fallenvorrichtung (1), den vom thermischen Modell für jeden einzelnen Reaktor stammenden Temperaturen und dem Massedurchsatz von Abgasen des Motors (3) zu berechnen.

9. Vorrichtung nach Anspruch 8, **dadurch gekennzeichnet, dass** sie Einrichtungen aufweist, um eine Korrektur der Speicherkapazität der katalytischen Stickoxidfallenvorrichtung (1) jedes einzelnen Reaktors i des Rangs i durchzuführen, wobei die Korrektur eine vorbestimmte Funktion der Eingangstemperatur des einzelnen Reaktors i ist, und die Speicherkapazität eine Funktion von Korrekturparametern ist, die die Stundenvolumengeschwindigkeit des einzelnen Reaktors i, die Alterung der katalytischen Fallenvorrichtung (1) und ihre Schwefelvergiftung enthalten.

10. Verfahren zur periodischen Regenerierung einer katalytischen Stickoxidfallenvorrichtung (1), die von den Abgasen (2) eines Verbrennungsmotors (3) eines Kraftfahrzeugs (4) durchquert wird, das eine elektronische Überwachungseinheit (5) aufweist, **dadurch gekennzeichnet, dass** die in der katalytischen Fallenvorrichtung (1) eingefangene Stickstoffmasse mittels des Verfahrens gemäß den Ansprüchen 6 oder 7 oder mit einer Vorrichtung gemäß den Ansprüchen 8 oder 9 geschätzt wird.

## FIG.1

## FIG.3

NOx moteur = $NOx\_1$

$NOx\_2$

$NOx\_3$

NOx sortie échappement = $NOx\_4$

$NS\_1$

$NS\_2$

$NS\_3$

# FIG.2

6

Réacteur i (modèle d'absorption)

25

(1-Eff_i) x NOx_i

14

14

NS_i/NSC_i                24

NOx_i        Eff_i

T_i        dNS_i/dt

26

27

NOx_i+1

13

23                22                20

13

17                19

15        T_i

VVH_i        NSC_i

Corrections_i        18

dNS_i/dt
NS_i/NSC_i
NSC_i
NS_i

16        21

Réacteur k (modèle
thermique)

8

Qg

9

T_k-1

10

Text

11

Vitesse véhicule

12

Concentrations gaz

13

T_k

7

**RÉFÉRENCES CITÉES DANS LA DESCRIPTION**

**Documents brevets cités dans la description**

- WO 0100972 A
- DE 19907382